# EUROPEAN PATENT APPLICATION

(11) **EP 4 573 918 A1**
(43) Date of publication of application: **25.06.2025**
(21) Application number: 24219508.9
(22) Date of filing: 12.12.2024
(51) Int. Cl.: A23C 19/068, A01J 25/00, B01F 35/95, B01F 35/90

(54) **DRY COOKER AND METHOD FOR PRODUCING PASTA-FILATA CHEESE**

(30) Priority: 19.12.2023 EP 23218383
(71) Applicant: Tetra Laval Holdings & Finance S.A., 1009 Pully (CH)
(72) Inventor: Bloemsma, Lammert, 8448 GW Heerenveen (NL); Fokkema, Bauke, 8448 GW Heerenveen (NL)
(74) Representative: Tetra Pak - Patent Attorneys SE

(57) **Abstract**

A dry cooker 100 for producing pasta-filata cheese is provided. The dry cooker 100 comprises at least two heating units 110, 120, 130. The heating unit 110, 120, 130 comprises a chamber 112, 122, 132 for conveying the pasta-filata cheese from an inlet 111, 121, 131 to an outlet 113, 123, 133, a flighted auger 116, 126, 136, a heating jacket 114, 124, 134 a steam injector 117, 127, 137 a PH sensor 115-3 arranged at the inlet 111, 121, 131 of the chamber 112, 122, 132 and configured to determine 230, 240, 250 a PH of the pasta-filata cheese, and a control unit 140 configured to control 260 a first heat load S11, S21, S31, HL of the heating media W1, W2, W3, S based on the determined PH of the pasta-filata cheese at the inlet 111, 121, 131.

## Description

### Technical Field

The invention relates to a dry cooker and a method for producing pasta-filata cheese by a dry cooker.

### Background

Industrial cookers have developed significantly over the past years. A type of industrial cookers is a dry cooker. The dry cooker can be used for cooking and stretching of various products such as pasta-filata cheese, provolone or pizza cheese. The dry cooker provides an improved environmental performance, as they employ a waterless cooking system.

Although the dry cookers have developed significantly over the past years e.g. in terms of production yield, there is still a need to provide an improved dry cooker as well as an improved method of producing a product by such dry cooker.

### Summary

In conventional dry cookers, a temperature of a curd may only be measured at an output of the dry cooker. In other words, in the conventional dry cookers, the temperature of the curd may not be measured throughout a cooking and stretching process.

Controlling a temperature of the curd throughout the cooking and stretching process is of crucial importance for several reasons such as food safety, quality of product, flavor development, nutrient retention and energy-efficiency. For example, cooking the curd at a wrong temperature may result into obtaining a too dry or a too dense cheese. Another example, cooking the curd at a wrong temperature may require a longer cooking time or more heat and thus it may make the cooking and stretching process less energy-efficient.

It is an object of the invention to at least partly overcome one or more of the above-identified limitations of the prior art. In particular, it is an object of the invention to provide an improved dry cooker and an improved method of producing pasta-filata cheese by a dry cooker that allows for determining the temperature of the curd at different stages during the cooking and stretching process. It is another object of the invention to provide an improved dry cooker and an improved method of producing pasta-filata cheese by a dry cooker that allows for controlling and adjusting the temperature of the curd at different stages during the cooking and stretching process.

According to a first aspect of the invention, a dry cooker for producing pasta-filata cheese is provided. The dry cooker comprises at least two heating units. The heating unit comprises a chamber for conveying the pasta-filata cheese from an inlet to an outlet of the chamber. The heating unit further comprises a flighted auger arranged in the chamber and configured to rotationally heat the pasta-filata cheese. The flighted auger comprises a hollow passage configured to be in fluid connection with a heating media. The heating unit further comprises a heating jacket surrounding the chamber and configured to be in fluid connection with the heating media. The heating unit further comprises a steam injector arranged in connection with the chamber, configured to be in fluid connection with the heating media and configured to inject steam into the chamber. The heating unit further comprises a PH sensor arranged at the inlet of the heating unit and configured to determine a PH of the pasta-filata cheese at the inlet (111, 121, 131) of the heating unit. The heating unit further comprises a control unit configured to control a first heat load of the heating media, configured to be in fluid connection with the hollow passage of the flighted auger, based on the determined PH of the pasta-filata cheese at the inlet of the heating unit by the PH sensor.

The dry cooker comprises at least two heating units: a first heating unit and a second heating unit. The second heating unit may be arranged downstream the first heating unit. The first heating unit may be configured for primarily heating the pasta-filata cheese. The first heating unit may also be configured for adding other ingredients such as salt into the pasta-filata cheese. The second heating unit may be configured for primarily stretching the pasta-filata cheese to align fibers in the cheese. The term heating unit may hereinafter be referred to as a section. For example, the first heating unit may hereinafter be referred to as a first section and so on.

The flighted auger comprises a hollow passage. The hollow passage of the flighted auger is configured to be in fluid connection with the heating medial. The heating media may be e.g. warm water. The flighted auger allows for cooking and stretching the pasta-filata cheese by rotationally heating the pasta-filata cheese.

The heating jacket also allows for heating and thus cooking the pasta-filata cheese, as the heating jacket is configured to be in fluid connection with the heating media e.g. warm water.

The steam injector also allows for heating and thus cooking the pasta-filata cheese, as the steam injector is configured to inject steam into the chamber. The steam injector may be in fluid connection with the heating media. Thus, the dry cooker allows for heating and thus cooking the pasta-filata cheese in three different ways in each section: 1) by means of the flighted auger, 2) by means of the heating jacket and 3) by means of the steam injector of the heating unit.

The control unit may further be configured to control the second heat load of the heating media, configured to be in fluid connection with the heating jacket of the heating unit, based on the determined PH of the pasta-filata cheese at the inlet of the heating unit by the PH sensor.

The control unit may further be configured to control the third heat load of the heating media, configured to be in fluid connection with the steam injector, based on the determined PH of the pasta-filata cheese at the inlet of the heating unit by the PH sensor.

The PH sensor is advantageous in that it allows for predicting a stiffness of the pasta-filata cheese, since PH is a leading indicator to predict a stiffness of the pasta-filata cheese. Thus, the PH sensor allows for controlling the stiffness of the pasta-filata cheese by controlling the first heat load, the second heat load and/or the third heat load corresponding respectively to the flighted auger, the heating jacket and the steam injector. Thereby, the PH sensor may allow for controlling the quality e.g. the stiffness of the pasta-filata cheese to be obtained in a more simple, accurate and consistent manner.

The dry cooker may preferably comprise one PH sensor. The one PH sensor may be arranged at the inlet of the first section. Each section of the dry cooker may comprise a whey discharge line. The whey discharge line may be arranged at the inlet of the first heating unit. The whey discharge line may be configured for continuously discharging/draining whey out of the heating unit. The PH sensor may preferably be arranged at the whey discharge line i.e. in contact with the whey being drained.

The control unit is advantageous in that it allows for controlling the first heat load of the heating media, configured to be in fluid connection with the hollow passage of the flighted auger, based on the determined PH of the pasta-filata cheese by the PH sensor. The control of the first heat load of the heating media, configured to be in fluid connection with the hollow passage of the flighted auger, by the control unit may comprise adjusting e.g. increasing or decreasing the first heat load of the heating media. Alternatively, the control of the first heat load of the heating media, configured to be in fluid connection with the hollow passage of the flighted auger, by the control unit may comprise no adjusting the first heat load of the heating media if the determined temperature of the pasta-filata cheese at the inlet is within a desired temperature range.

Thereby, the PH sensor and the control unit allow for controlling and if needed updating setpoints of the first, the second or the third heat load of the heating media, configured to be in fluid connection with the hollow passage of the flighted auger, the heating jacket and the steam injector, respectively. The control unit may first update the setpoints of the first heat load of the heating media, configured to be in fluid connection with the hollow passage of the flighted auger. The control unit may next update the setpoints of the second heat load of the heating media, configured to be in fluid connection with the heating jacket, when the flighted auger reaches its maximum/minimum heat load. The control unit may next update the setpoints of the third heat load of the heating media, configured to be in fluid connection with the steam injector, when the heating jacket reaches its maximum/minimum heat load.

. Thereby, the PH sensor and the control unit allow for adjusting of the temperature of the pasta-filata cheese at the inlet of the first heating unit i.e. at the inlet of the first section of the dry cooker or subsequent sections. Thus, the PH sensor and the control unit allow for controlling and if needed adjusting of the temperature of the pasta-filata cheese at an early stage of the cooking process. Thus, the inventive dry cooker is advantages in that it addresses or at least mitigates the problems of the conventional dry cookers e.g. food safety, quality of cheese, flavor development, nutrient retention and energy efficiency. The inventive dry cooker allows for controlling and if needed adjusting the temperature of the pasta-filata cheese during the cooking and stretching process by providing a simple, flexible, accurate, consistent and user-friendly dry cooker.

By the term "heat load of the heating media" is hereby meant the amount of heat energy that must be added or removed from the pasta-filata cheese to achieve a desired temperature. Heat load can be adjusted by, for example, increasing one or both of the flow rate of the heating media and the temperature of the heating media.

By the term "updating the heat load" is hereby meant updating a setpoint temperature and/or a setpoint mass flow of the heat load.

By the term "control unit configured to control the respective heat load" is hereby meant that the control unit is configured to output a control signal to controllers such as Proportional-Integral-Derivative (PID) controllers of the respective part to adjust valve positions and thus to control the respective heat load of the heating media. For example, in the case of flighted auger, the term "control unit configured to control the first heat load" is hereby meant that the control unit is configured to output a control signal to controllers such as PID controllers of the flighted auger to adjust valve positions and thus to control the first heat load of the heating media, supplied by the flighted auger.

By the term "pasta-filata cheese" is hereby meant cheese curd while being cooked by the dry cooker and the pasta-filata cheese product obtained after being cooked by the dry cooker.

The dry cooker may further comprise a first temperature sensor. The first temperature sensor may be arranged at the inlet of the chamber. The first temperature sensor may be configured to determine a temperature of the pasta-filata cheese at the inlet. The control unit may further be configured to control the first heat load of the heating media, configured to be in fluid connection with the hollow passage of the flighted auger of the heating unit, based on the determined temperature of the pasta-filata cheese at the inlet by the first temperature sensor.

The first temperature sensor may be advantageous in that it allows for determining/measuring the temperature of the pasta-filata cheese at the inlet of the chamber of the heating unit. The first temperature sensor may be a probe temperature. The first temperature may be configured to be in contact with the pasta-filata cheese. The control of the first heat load of the heating media, configured to be in fluid connection with the hollow passage of the flighted auger, by the control unit may comprise adjusting e.g. increasing or decreasing the first heat load of the heating media. Alternatively, the control of the first heat load of the heating media, configured to be in fluid connection with the hollow passage of the flighted auger, by the control unit may comprise no adjusting the first heat load of the heating media if the determined temperature of the pasta-filata cheese at the inlet is within a desired temperature range.

The control unit may further be configured to control a second heat load of the heating media, configured to be in fluid connection with the heating jacket, based on the determined temperature of the pasta-filata cheese at the inlet by the first temperature sensor.

The control of the second heat load of the heating media, configured to be in fluid connection with the heating jacket, by the control unit may comprise adjusting e.g. increasing or decreasing the second heat load of the heating media, configured to be in fluid connection with the heating jacket, based on the determined temperature by the first temperature sensor.

Alternatively, the control of the second heat load of the heating media, configured to be in fluid connection with the heating jacket, by the control unit may comprise no adjusting the second heat load of the heating media if the determined temperature of the pasta-filata cheese at the inlet is within a desired temperature range. The second heat load may correspond to the first heat load. For example, a temperature of the heating media, configured to be in fluid connection with the heating jacket, may be similar to a temperature of heating media, configured to be in fluid connection with the flighted auger. Alternatively, the second heat load may not correspond to the first heat load.

The control unit may further be configured to control a third heat load of the heating media, configured to be in fluid connection with the steam injector, based on the determined temperature of the pasta-filata cheese at the inlet by the first temperature sensor.

The control of the third heat load of the heating media, configured to be in fluid connection with the steam injector, may comprise adjusting e.g. increasing or decreasing the third heat load of the steam based on the determined temperature by the first temperature sensor.

Alternatively, the control of the heating media, configured to be in fluid connection with the steam injector, may comprise no adjusting the third heat load of the heating media if the determined temperature of the pasta-filata cheese at the inlet is within a desired temperature range. The third heat load may correspond to the first heat load or the second heat load. For example, a temperature of the heating media, configured to be in fluid connection with the heating jacket, may be similar to a temperature of the steam, configured to be injected by the steam injector. Alternatively, the third heat load may not correspond to the first heat load or the second heat load.

The dry cooker may further comprise a second temperature sensor arranged at the outlet of the chamber and configured to determine a temperature of the pasta-filata cheese at the outlet. The control unit may further be configured to control the first heat load of the heating media, configured to be in fluid connection with the hollow passage of the flighted auger, based on the determined temperature of the pasta-filata cheese at the outlet by the second temperature sensor.

The second temperature sensor together with the control unit may generally present the same or corresponding advantages as the first temperature sensor. They may allow for controlling and if needed adjusting of the temperature of the pasta-filata cheese at the outlet of the first section or subsequent sections. Thereby, they may allow for controlling and if needed adjusting of the temperature of the pasta-filata cheese still at the early stage of the cooking process i.e. before the pasta-filata cheese enters subsequent sections e.g. the second section.

The control unit may further be configured to control the second heat load of the heating media, configured to be in fluid connection with the heating jacket, based on the determined temperature of the pasta-filata cheese at the outlet by the second temperature sensor.

Thereby, the second heat load of the heating media, configured to be in fluid connection with the heating jacket, may also be controlled by considering the determined temperature of the pasta-filata cheese at the outlet of the chamber i.e. the second heat load of the heating media may be controlled in a more accurate and consistent manner.

The control unit may further be configured to control the third heat load of the heating media, configured to be in fluid connection with the steam injector, based on the determined temperature of the pasta-filata cheese at the outlet by the second temperature sensor.

Thereby, the third heat load of the heating media, configured to be in fluid connection with the steam injector, may also be controlled by considering the determined temperature of the pasta-filata cheese at the outlet of the chamber i.e. the third heat load of the steam may be controlled in a more accurate and consistent manner.

The dry cooker may comprise a first heating unit, a second heating unit and a first conveying means. The first conveying means may be arranged in between the first heating unit and the second heating unit. The second heating unit may be arranged downstream the first heating unit. The first conveying means may be configured to convey the pasta-filata cheese from the outlet of the first heating unit to the inlet of the second heating unit.

The dry cooker may further comprise a first speed roller and a first encoder at the first conveying means. The first speed roller may be arranged in connection with the first conveying means such that the first speed roller may be configured to rotate/turn when the pasta-filata cheese is being conveyed at the first conveying means. The first encoder may be configured to determine a number of rotations/turns of the first speed roller when the pasta-filata cheese is being conveyed at the first conveying means. Thereby, the dry cooker may be configured to measure a mass flow rate of the pasta-filata cheese. In case that the dry cooker comprises more than two heating units, the dry cooker may comprise corresponding conveying means, speed rollers and encoders in between subsequent heating units.

The dry cooker may further comprise a weight sensor. The weight sensor may be arranged at the first conveying means. The weight sensor may be configured to determine a weight of the pasta-filata cheese being conveyed from the first heating unit to the second heating unit. The control unit may further be configured to control the first heat load of the heating media, configured to be in fluid connection with the hollow passage of the flighted auger of the second heating unit, based on the determined weight of the pasta-filata cheese at the first conveying means by the weight sensor.

The control unit may further be configured to control the second heat load of the heating media, configured to be in fluid connection with the heating jacket of the second heating unit, based on the determined weight of the pasta-filata cheese at the first conveying means by the weight sensor.

The control unit may further be configured to control the third heat load of the heating media, configured to be in fluid connection with the steam injector of the second heating unit, based on the determined weight of the pasta-filata cheese at the first conveying means by the weight sensor.

Some ingredients such as salt may be added into the pasta-filata cheese in between the first heating unit and the second heating unit. Thus, a weight of the pasta-filata cheese may be different at the second heating unit, compared to the first heating unit. The weight sensor may be advantageous in that it allows for controlling the temperature of the pasta-filata cheese, based on the determined weight of the pasta-filata cheese. Thereby, the first heat load, the second heat load and/or the third heat load of the second heating unit may be controlled in a more accurate and consistent manner.

The dry cooker may further comprise a torque sensor. The torque sensor may be arranged in connection with the flighted auger. The torque sensor may be configured to determine a torque of the rotating flighted auger. The control unit may further be configured to control the first heat load of the heating media, configured to be in fluid connection with the hollow passage of the flighted auger, based the determined torque of the rotating flighted auger by the torque sensor.

The control unit may further be configured to control the second heat load of the heating media, configured to be in fluid connection with the heating jacket of the heating unit, based the determined torque of the rotating flighted auger by the torque sensor.

The control unit may further be configured to control the third heat load of the heating media, configured to be in fluid connection with the steam injector of the heating unit, based the determined torque of the rotating flighted auger by the torque sensor.

Each heating unit of the dry cooker may comprise a respective motor. The motor may be arranged in connection with the respective flighted auger. The motor may be configured to rotate the respective flighted auger. The motor may comprise a build-in torque sensor.

The dry cooker may further comprise a mass flow sensor. The mass flow sensor may be arranged in connection with the flighted auger. The mass flow sensor may be configured to determine a mass flow of the first heat load. The control unit may further be configured to control the first heat load of the heating media, configured to be in fluid connection with the hollow passage of the flighted auger of the first heating unit, based on the determined mass flow of the first heat load by the mass flow sensor.

The mass flow sensor may be configured to determine a mass flow of the first heat load, supplied by the flighted auger.

The dry cooker may further comprise a mass flow sensor. The mass flow sensor may be arranged in connection with the heating jacket. The control unit may further be configured to control the second heat load of the heating media, configured to be in fluid connection with the heating jacket of the heating unit, based the determined mass flow of the second heat load by the mass flow sensor.

The dry cooker may further comprise a mass flow sensor. The mass flow sensor may be arranged in connection with the steam injector. The control unit may further be configured to control the third heat load of the heating media, configured to be in fluid connection with the steam injector, based the determined mass flow of the third heat load by the mass flow sensor. By the term mass flow is hereby meant mass flow rate.

The dry cooker may be configured such that the heating media may have no direct contact with pasta-filata cheese.

The dry cooker may be configured such that no hot water may be added to the pasta-filata cheese. Thereby, the dry cooker is advantages in that it allows for an improved environmental performance, as it is a waterless cooking device.

The dry cooker may be configured to continuously drain whey out of each heating unit via respective whey discharge lines. Thus, the dry cooker is advantageous in that it allows for continuous production of the pasta-filata cheese.

According to a second aspect of the invention, a method for producing pasta-filata cheese by a dry cooker is provided. The method comprises step of receiving the pasta-filata cheese via an inlet of a chamber of a heating unit of the dry cooker. The method further comprises step of conveying the pasta-filata cheese from the inlet to an outlet of the chamber of the dry cooker by a flighted auger arranged in the chamber. The method comprises step of determining a PH of the pasta-filata cheese at the inlet of the chamber by a PH sensor. The method comprises step of controlling a first heat load of a heating media, being in fluid connection with a hollow passage of the flighted auger of the heating unit, based on the determined PH of the pasta-filata cheese at the inlet.

This aspect may generally present the same or corresponding advantages as the first aspect of the invention. The step of conveying may comprise rotationally heating the pasta-filata cheese by the flighted auger of the heating unit. The step of conveying may comprise cooking and stretching the pasta-filata cheese.

The step of controlling may comprise controlling the second heat load of the heating media, being configured to be in fluid connection with the heating jacket of the heating unit, based on the determined PH of the pasta-filata cheese at the inlet.

The step of controlling may comprise controlling the third heat load of the heating media, being configured to be in fluid connection with the steam injector of the heating unit, based on the determined PH of the pasta-filata cheese at the inlet.

The method may further comprise step of determining a temperature of the pasta-filata cheese at the inlet of the chamber by a first temperature sensor. The method comprises step of controlling the first heat load of a heating media, being in fluid connection with a hollow passage of the flighted auger of the heating unit, based on the determined temperature of the pasta-filata cheese at the inlet

The step of controlling may further comprise controlling a second heat load of the heating media, being configured to be in fluid connection with a heating jacket of the heating unit, based on the determined temperature of the pasta-filata cheese at the inlet by the first temperature sensor.

The step of controlling may further comprise controlling a third heat load of the heating media, being configured to be in fluid connection with the steam injector of the heating unit, based on the determined temperature of the pasta-filata cheese at the inlet by the first temperature sensor.

The method may further comprise the step of determining a temperature of the pasta-filata cheese at the outlet of the chamber by a second temperature sensor. The step of controlling may comprise controlling the first heat load of the heating media, being configured to be in fluid connection with the flighted auger of the heating unit, based on the determined temperature of the pasta-filata cheese at the outlet.

The step of controlling may comprise controlling the second heat load of the heating media, being configured to be in fluid connection with the heating jacket of the heating unit, based on the determined temperature of the pasta-filata cheese at the outlet.

The step of controlling may comprise controlling the third heat load of the heating media, being configured to be in fluid connection with the steam injector, based on the determined temperature of the pasta-filata cheese at the outlet.

The method may further comprise the step of determining a weight of the pasta-filata cheese at the first conveying means of the dry cooker by a weight sensor. The step of controlling may comprise controlling the first heat load of the heating media, being configured to be in fluid connection with the flighted auger of the second heating unit, based on the determined weight of the pasta-filata cheese at the first conveying means by the weight sensor.

The step of controlling may comprise controlling the second heat load of the heating media, being configured to be in fluid connection with the heating jacket of the second heating unit, based on the determined weight of the pasta-filata cheese at the first conveying means by the weight sensor.

The step of controlling may comprise controlling the third heat load of the heating media, being configured to be in fluid connection with the steam injector of the heating unit, based on the determined weight of the pasta-filata cheese at the first conveying means by the weight sensor.

The method may further comprise the step of determining a torque of the rotating flighted auger by a torque sensor being arranged in connection with the flighted auger. The step of controlling may comprise controlling the first heat load of the heating media, being configured to be in fluid connection with the flighted auger of the heating unit, based the determined torque of the rotating flighted auger by the torque sensor.

The step of controlling may comprise controlling the second heat load of the heating media, being configured to be in fluid connection with the heating jacket of the heating unit, based the determined torque of the rotating flighted auger by the torque sensor.

The step of controlling may comprise controlling the third heat load of the heating media, being configured to be in fluid connection with the steam injector of the heating unit, based the determined torque of the rotating flighted auger by the torque sensor.

The method may further comprise the step of determining a mass flow of the first heat load by a mass flow sensor being arranged in connection with the flighted auger, the heating jacket or the steam injector. The step of controlling may respectively comprise controlling the first heat load, the second heat load, or the third heat load of the heating media, being configured to be in fluid connection with the flighted auger of the heating unit, the heating jacket or the steam injector based on the determined first, second or third heat load of the heating media by the mass flow sensor.

The step of determining may be performed at intervals in the range of 1 to 5 min such as 2 min.

Thereby, a frequency of determining any of or any combination of the PH, the temperature, the weight, the mass flow, the torque may be adjusted as desired. This may in turn provide an improved method for producing pasta-filata cheese by the dry cooker in terms of simplicity, flexibility, and user-friendliness.

The step of controlling the first heat load of the heating media may comprise adjusting the first heat load of the heating media, being configured to be in fluid connection with a hollow passage of the flighted auger of the heating unit, when a difference in the temperature of the pasta-filata cheese at the inlet and a setpoint temperature of the flighted auger is larger than a first pre-determined value. The first pre-determined value may be in the range of 2 to 5 °C such as 3 °C.

Alternatively, the step of controlling the first heat load of the heating media may comprise no adjusting the first heat load of the heating media, being configured to be in fluid connection with a hollow passage of the flighted auger of the heating unit, when a difference in the determined temperature of the pasta-filata cheese at the inlet and the setpoint temperature of the flighted auger is smaller than a first pre-determined value.

The step of controlling the first heat load of the heating media may comprise adjusting the first heat load of the heating media, being configured to be in fluid connection with a hollow passage of the flighted auger of the heating unit, when a difference in the determined mass flow of the first heat load and a setpoint mass flow is larger than another first pre-determined value. The another first pre-determined value may be in the range of 4 to 7 °C.

Alternatively, the step of controlling the first heat load of the heating media may comprise no adjusting the first heat load of the heating media, being configured to be in fluid connection with a hollow passage of the flighted auger of the heating unit, when a difference in the determined mass flow of the first heat load and the setpoint mass flow is smaller than the another first pre-determined value.

The step of controlling the first heat load of the heating media, being in fluid connection with the flighted auger of the heating unit may comprise adjusting a temperature of the first heat load by a second pre-determined value within each interval. The second pre-determined value may be in the range of 0.1 to 2 °C.

The step of controlling the first heat load of the heating media, being in fluid connection with the flighted auger of the heating unit may comprise adjusting a mass flow of the first heat load by another second pre-determined value within each interval. The another second pre-determined value may be in the range of 2 to 5 °C..

The step of controlling the second heat load of the heating media may comprise adjusting the second heat load of the heating media, being configured to be in fluid connection with the heating jacket of the heating unit when a difference in the determined temperature of the pasta-filata cheese at the inlet and a setpoint temperature of the heating jacket is larger than a third pre-determined value. The third pre-determined value may be in the range of 2 to 5 °C such as 3 °C.

Alternatively, the step of controlling the second heat load of the heating media may comprise no adjusting the second heat load of the heating media, being configured to be in fluid connection with the heating jacket of the heating unit when a difference in the determined temperature of the pasta-filata cheese at the inlet and a setpoint temperature of the heating jacket is smaller than the third pre-determined value.

The step of controlling the second heat load of the heating media may comprise adjusting the second heat load of the heating media, being configured to be in fluid connection with the heating jacket of the heating unit when a difference in the determined mass flow of the second heat load and a setpoint mass flow of the heating jacket is larger than another third pre-determined value.

Alternatively, the step of controlling the second heat load of the heating media may comprise no adjusting the second heat load of the heating media, being configured to be in fluid connection with the heating jacket of the heating unit when a difference in the determined mass flow of the second heat load and a setpoint mass flow of the heating jacket is smaller than the another third pre-determined value.

The step of controlling the second heat load of the heating media, being configured to be in fluid connection with the heating jacket of the heating unit, may comprise adjusting a temperature of the second heat load by a fourth pre-determined value within each interval. The fourth pre-determined value may be in the range of 0.1 to 2 °C.

The step of controlling the second heat load of the heating media, being configured to be in fluid connection with the heating jacket of the heating unit may comprise adjusting the mass flow of the second heat load by another fourth pre-determined value within each interval. The another fourth pre-determined value may be in the range of 2 to 5 °C.

The step of controlling the second heat load of the heating media, being configured to be in fluid connection with the heating jacket of the heating unit, may be performed when the determined temperature of the pasta-filata cheese at the inlet reaches the setpoint temperature of the flighted auger. The step of controlling the second heat load of the heating media, being configured to be in fluid connection with the heating jacket of the heating unit, may be performed when the determined mass flow of the first heat load reaches the setpoint mass flow of the first heating media.

The step of controlling the third heat load of the heating media may comprise adjusting the third heat load of the heating media when a difference in the temperature of the pasta-filata cheese at the inlet and a setpoint temperature of the steam injector is larger than a fifth pre-determined value. The fifth pre-determined value may be in the range of 2 to 5 °C such as 3 °C.

Alternatively, the step of controlling the third heat load of the heating media may comprise no adjusting the third heat load of the heating media when a difference in the temperature of the pasta-filata cheese at the inlet and the setpoint temperature of the steam injector is smaller than the fifth pre-determined value.

The step of controlling third heat load of the heating media, being configured to be in fluid connection with the steam injector of the heating unit, may comprise adjusting a temperature of the third heat load by a sixth pre-determined value within each interval. The sixth pre-determined value may be in the range of 0.1 to 2 °C.

The step of controlling the third heat load of the heating media, being configured to be in fluid connection with the steam injector of the heating unit, may comprise adjusting a mass flow of the third heat load by another sixth pre-determined value within each interval. The another sixth pre-determined value may be in the range of 2 to 5 °C.

The step of controlling the third heat load of t the heating media, being configured to be in fluid connection with the steam injector of the heating unit, may be performed when the determined temperature of the pasta-filata cheese at the inlet reaches the setpoint temperature of the heating jacket. The step of controlling the third heat load of the heating media, being configured to be in fluid connection with the steam injector of the heating unit, may be performed when the determined mass flow of the second heating media reaches the setpoint mass flow of the second heat load.

The fifth pre-determined value may be larger than the third pre-determined value. The third pre-determined value may be larger than the first pre-determined value.

The step of controlling the first heat load may be performed in the following order. The step of controlling the first heat load may first be performed, based on the determined PH of the pasta-filata cheese at the inlet by the pH sensor.

The step of controlling the first heat load may next be performed, based on the determined temperature of the pasta-filata cheese at the inlet.

The step of controlling the first heat load may next be performed, based on the determined mass flow of the first heat load.

The step of controlling the second heat load or the third heat load may be performed in the same order, as described above in respect to the first heat load.

Still other objectives, features, aspects and advantages of the invention will appear from the following detailed description as well as from the drawings.

### Drawings

Embodiments of the invention will now be described, by way of example, with reference to the accompanying schematic drawings, in which
Fig. 1 is a perspective view of a dry cooker.
Fig. 2a and 2b show temperature profiles across different sections of the dry cooker.
Fig. 3 shows temperature profiles and PH profiles across different sections of the dry cooker.
Fig. 4 shows steps of a method for producing pasta-filata cheese by a dry cooker.
Fig. 5 shows sub-method of the method shown in Fig. 4.
Figs. 6, 7, and 8 show sub-methods of the sub-method shown in Fig. 5.

### Description

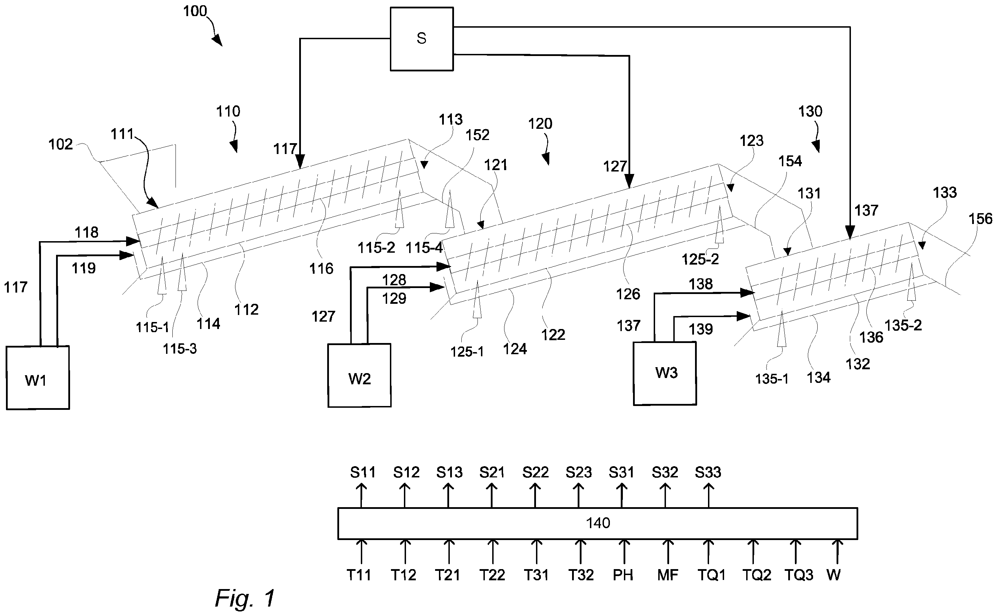

With reference to Fig. 1 a dry cooker 100 for producing pasta-filata cheese is illustrated. The dry cooker 100 comprises at least two heating units 110, 120, 130. The dry cooker 100, shown in Fig. 1, comprises three heating unit 110, 120, 130: a first heating unit 110, a second heating unit 120, and a third heating unit 130. The second heating unit 120 may be arranged downstream the first heating unit 110. The third heating unit 130 may be arranged downstream the second heating unit 120. The first heating unit 110 may be configured for primarily heating the pasta-filata cheese. The second heating unit 120 may be configured for adding other ingredients such as salt into the pasta-filata cheese. The third heating unit 130 may be configured for primarily stretching the pasta-filata cheese to align fibers in the cheese. Each heating unit 110, 120, 130 comprises a chamber 112, 122, 132 for conveying the pasta-filata cheese from an inlet 111, 121, 131 to an outlet 113, 123, 133 of the chamber 112, 122, 132. The dry cooker 100 may further comprise a hopper 102 in connection with the inlet of the first heating unit 110. The hopper 10 may be configured to receive cheese curd/pasta-filata cheese.

Each heating unit 110, 120, 130 comprises a flighted auger 116, 126, 136. The flighted auger 116, 126, 136 is arranged in the chamber 112, 122, 132. The flighted auger 116, 126, 136 is configured to rotationally heat the pasta-filata cheese. The flighted auger 116, 126, 136 comprises a hollow passage. The hollow passage is configured to be in fluid connection with a heating media W1, W2, W3, S. The hollow passage may comprise a hollow shaft. The hollow passage may comprise a hollow fluid chamber coupled to solid flights. Each heating unit 110, 120, 130 comprises a heating jacket 114, 124, 134. The heating jacket 114, 124, 134 surrounds the chamber 112, 122, 132. The heating jacket 114, 124, 134 is configured to be in fluid connection with the heating media W1, W2, W3, S. Each heating unit 110, 120, 130 comprises a steam injector 117, 127, 137. The steam injector 117, 127, 137 is arranged in connection with the chamber 112, 122, 132. The steam injector 117, 127, 137 is configured to be in fluid connection with the heating media W1, W2, W3, S. The steam injector 117, 127, 137 is configured to inject steam into the chamber 112, 122, 132. The steam injector 117, 127, 137 may be arranged within a hood above the chamber 112, 122, 132.

Still with reference to Fig. 1, the dry cooker 100 may comprise a reservoir for the heating media W1, W2, W3, S. The dry cooker 100 may comprise a plurality of reservoirs for the heating media W1, W2, W3, S. For example, the dry cooker 100 may comprise a first reservoir for the heating media W1, W2, W3, S, being in fluid connection with each respective flighted auger 116, 126, 136. Another example, the dry cooker 100 may comprise a second reservoir for the heating media W1, W2, W3, S, being in fluid connection with each respective heating jacket 114, 124, 134. Yet another example, the dry cooker 100 may comprise a third reservoir for the heating media W1, W2, W3, S, being in fluid connection with each respective steam injector 117, 127, 137. The dry cooker 100 may be a closed-loop heating system. Alternatively, the dry cooker 100 may not be a closed-loop heating system. An example of the heating media W1, W2, W3, S is warm water. The heating media W1, W2, W3, S may also be steam, in particular the heading media S supplied by the steam injector 117, 127, 137.

Still with reference to Fig. 1, the heating unit 110, 120, 130 may comprise a first temperature sensor 115-1, 125-1, 135-1. The first temperature sensor 115-1, 125-1, 135-1 may be arranged at the inlet 111, 121, 131 of the chamber 112, 122, 132. The first temperature sensor 115-1, 125-1, 135-1 may be configured to determine a temperature T11, T21, T31 of the pasta-filata cheese at the inlet 111, 121, 131. The heating unit 110, 120, 130 comprises a control unit 140. The control unit 140 may be configured to control a first heat load S11, S21, S31, HL of the heating media W1, W2, W3, S, configured to be in fluid connection with the hollow passage of the flighted auger 116, 126, 136, based on the determined temperature T11, T21, T31 of the pasta-filata cheese at the inlet 111, 121, 131 by the first temperature sensor 115-1, 125-1, 135-1. The control unit 140 may further configured to control a second heat load S12, S22, S32, HL of the heating media W1, W2, W3, S, configured to be in fluid connection with the heating jacket 118, 128, 138, based on the determined temperature T11, T21, T31 of the pasta-filata cheese at the inlet 111, 121, 131 by the first temperature sensor 115-1, 125-1, 135-1. The control unit 140 may further be configured to control a third heat load S13, S23, S33, HL of the heating media W1, W2, W3, S, configured to be in fluid connection with the steam injector 117, 127, 137, based on the determined temperature T11, T21, T31 of the pasta-filata cheese at the inlet 111, 121, 131 by the first temperature sensor 115-1, 125-1, 135-1.

Still in connection with Fig. 1, the dry cooker 100 may further comprise a second temperature sensor 115-2, 125-2, 135-2. The second temperature sensor 115-2, 125-2, 135-2 may be arranged at the outlet 113, 123, 133 of the chamber 112, 122, 132. The second temperature sensor 115-2, 125-2, 135-2 may be configured to determine a temperature T12, T22, T32 of the pasta-filata cheese at the outlet 113, 123, 133 of the chamber 112, 122, 132. The control unit 140 may further be configured to control the first heat load S11, S21, S31, HL of the heating media W1, W2, W3, S, configured to be in fluid connection with the hollow passage of the flighted auger 116, 126, 136, based on the determined temperature T12, T22, T32 of the pasta-filata cheese at the outlet 113, 123, 133 by the second temperature sensor 115-2, 125-2, 135-2. The dry cooker 100 further comprises a PH sensor 115-3. The PH sensor 115-3 is arranged at the inlet 111, 121, 131 of the heating unit 110, 120, 130. The PH sensor 115-3 is configured to determine a PH of the pasta-filata cheese at the inlet 111, 121, 131 of the heating unit 110, 120, 130. The control unit 140 is configured to control the first heat load S11, S21, S31, HL of the heating media, configured to be in fluid connection with the hollow passage of the flighted auger 116 of the heating unit 110, 120, 130, based on the determined PH of the pasta-filata cheese at the inlet 111 of the heating unit 110, 120, 130 by the PH sensor 115-3.

Still in connection with Fig. 1, the dry cooker 100 may comprise a first conveying means 152. The first conveying means 152 may be arranged in between the first heating unit 110 and the second heating unit 120. The first conveying means 152 may be configured to convey the pasta-filata cheese from the outlet 113 of the first heating unit 110 to the inlet 121 of the second heating unit 120. The dry cooker 100 may comprise a second conveying means 154. The second conveying means 154 may be arranged in between the second heating unit 120 and the third heating unit 130. The second conveying means 154 may be configured to convey the pasta-filata cheese from the outlet 123 of the second heating unit 120 to the inlet 131 of the third heating unit 130. The dry cooker 100 may further comprise a first roller and a first encoder at the first conveying means 152. The dry cooker 100 may further comprise a second roller and a second encoder at the second conveying means 152.

Still in connection with Fig. 1, the dry cooker 100 may further comprise a weight sensor 115-4. The weight sensor 115-4 may be arranged at the first conveying means 152. The weight sensor 115-4 may be configured to determine a weight W of the pasta-filata cheese being conveyed from the first heating unit 110 to the second heating unit 120. The control unit 140 may further be configured to control the first heat load S11, S21, S31, HL of the heating media W1, W2, W3, S, configured to be in fluid connection with the hollow passage of the flighted auger 126 of the second heating unit 110, based on the determined weight W of the pasta-filata cheese at the first conveying means 152 by the weight sensor 115-4. The dry cooker 100 may be configured such that the heating media W1, W2, W3, S has no direct contact with pasta-filata cheese.

Still in connection with Fig. 1, the dry cooker 100 may comprise one control unit 140, configured to control the first heat load S11, S21, S31, HL, the second heat load S12, S22, S32, HL and the third heat load S13, S23, S33, HL of all heating units 110, 120, 130. The dry cooker 100 may comprise a plurality of PID controllers to automatically adjust a valve position based on the difference between the desired and actual temperature or flow rates. The control unit 140 may output a control signal S11 to control the first heat load HL, configured to be supplied by the flighted auger 116 in the first heating unit 110. The control unit 140 may output another control signal S12 to control the second heat load HL, configured to be supplied by the heating jacket 112 in the first heating unit 110. The control unit 140 may output yet another control signal S13 to control the third heat load HL, configured to be supplied by the steam injector 117 in the first heating unit 110. The control unit 140 may output yet another control signal S21 to control the first heat load HL, configured to be supplied by the flighted auger 126 in the second heating unit 120. The control unit 140 may output yet another control signal S22 to control the second heat load HL, configured to be supplied by the heating jacket 122 in the second heating unit 120. The control unit 140 may output yet another control signal S23 to control the third heat load HL, configured to be supplied by the steam injector 127 in the second heating unit 120. The control unit 140 may output yet another control signal S31 to control the first heat load HL, configured to be supplied by the flighted auger 136 in the third heating unit 130. The control unit 140 may output yet another control signal S32 to control the second heat load HL, configured to be supplied by the heating jacket 132 in the third heating unit 130. The control unit 140 may output yet another control signal S33 to control the third heat load HL, configured to be supplied by the steam injector 137 in the third heating unit 130. The control unit 140 may output control signals S11, S12, S13, S21, S22, S23, S31, S32, S33 based on input signals corresponding to any of or any combination of the determined temperatures T11, T12, T22, T21, T22, T23, T31, T32, T33, PH, torque TQ1, TQ2, TQ3 and the mass flow MF.

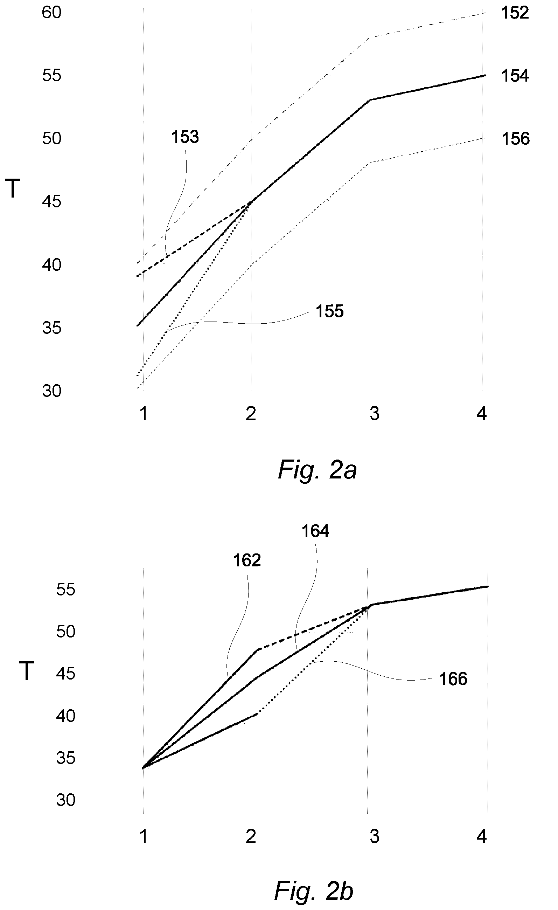

Fig. 2a illustrates examples of temperature profiles across different sections of the dry cooker 100. The temperature profiles, shown in Fig. 2a, correspond to a dry cooker 100 which comprises two heating units 110, 120. A location 1 may correspond to the inlet 113 of the first heating unit 110 i.e. the first section 110 of the dry cooker 100. A location 2 may correspond to a location at the first section of the dry cooker 100. A location 3 may correspond to a location at the second section 120 of the dry cooker 100. A location 4 may correspond to the outlet 123 of the second section 120.

Fig. 2a illustrates five temperature profiles 152, 153, 154, 155, and 156. Fig. 2a shows examples of controlling/adjusting the heat load of the heating media, configured to be in fluid connection with the hollow passage of the flighted auger 116 of the heating unit 110, 120, 130, based on the determined temperature of the pasta-filata cheese at the inlet 111, 121, 131 of the heating unit 110, 120, 130. The temperature profile 152 illustrates that a temperature T11 of the pasta-filata cheese at the inlet 113 is 40 °C which is considered as a high temperature. The temperature of the pasta-filata cheese increases across the first section 1 and the second section 2 without any adjustment/compensation. The temperature T22 of the pasta-filata cheese reaches 60 °C at the outlet 123 of the second section 120. The temperature 60 °C may be higher than a desired temperature T22 of 55 °C at the outlet 123 of the second section 120. The temperature profile 156 illustrates that a temperature T11 of the pasta-filata cheese at the inlet 113 is 30 °C which is considered as a low temperature. The temperature of the pasta-filata cheese increases across the first section 1 and the second section 2 without any adjustment/compensation. The temperature T22 of the pasta-filata cheese reaches 50 °C at the outlet 123 of the second section 120. The temperature 50 °C may be lower than the desired temperature T22 of 55 °C at the outlet 123 of the second section 120. The temperature profile 153 illustrates that a temperature of the pasta-filata cheese at the inlet 113 is 39 °C which is considered as a high temperature. The temperature of the pasta-filata cheese is adjusted across the first section 1, as it reaches a temperature profile 154 which is an example of a desired temperature profile. The temperature T22 of the pasta-filata cheese reaches 55 °C at the outlet 123 of the second section 120 which is a desired value. The temperature profile 155 illustrates that a temperature of the pasta-filata cheese at the inlet 113 is 31 °C which is considered as a low temperature. The temperature of the pasta-filata cheese is adjusted across the first section 1, as it reaches the temperature profile 154 which is the example of the desired temperature profile. The temperature T22 of the pasta-filata cheese reaches 55 °C at the outlet 123 of the second section 120 which is the desired value.

Fig. 2b illustrates examples of temperature profiles across different sections of the dry cooker 100. The temperature profiles, shown in Fig. 2b, correspond to a dry cooker 100 which comprises three heating units 110, 120, 130.

Fig. 2b shows examples of control/adjusting the heat load of the heating media, configured to be in fluid connection with the hollow passage of the flighted auger 126 of the second heating unit 120, based on the determined weight of the pasta-filata cheese at the first conveying means 152. A location 1 may correspond to a location at the first section 110 of the dry cooker 100. A location 2 may correspond to a location at the second section 120 of the dry cooker 100. A location 3 may correspond to a location at the third section 130 of the dry cooker 100. A location 4 may correspond to the outlet 133 of the third section 130. Fig. 2b illustrate three temperature profiles 162, 164, and 166. The temperature profile 164 illustrates a desired temperature profile of the pasta-filata. The temperature profile 162 illustrates that a weight of the pasta-filata cheese is decreased at second section 2 e.g. due to draining of whey. The temperature of the pasta-filata cheese is adjusted across the second section 2 as shown by the dashed line, as it reaches the temperature profile 164 at the third section 3 which is the desired temperature profile. The temperature T32 of the pasta-filata cheese reaches 55 °C at the outlet 133 of the third heating unit 130 which is the desired value. The temperature profile 166 illustrates that a weight of the pasta-filata cheese is increased at second section 2 e.g. due to addition of other ingredients such as salt. The temperature of the pasta-filata cheese is adjusted across the second section 2 as shown by the dotted line, as it reaches the temperature profile 164 at the third section 3 which is the desired temperature profile. The temperature T32 of the pasta-filata cheese reaches 55 °C at the outlet 133 of the third heating unit 130 which is the desired value.

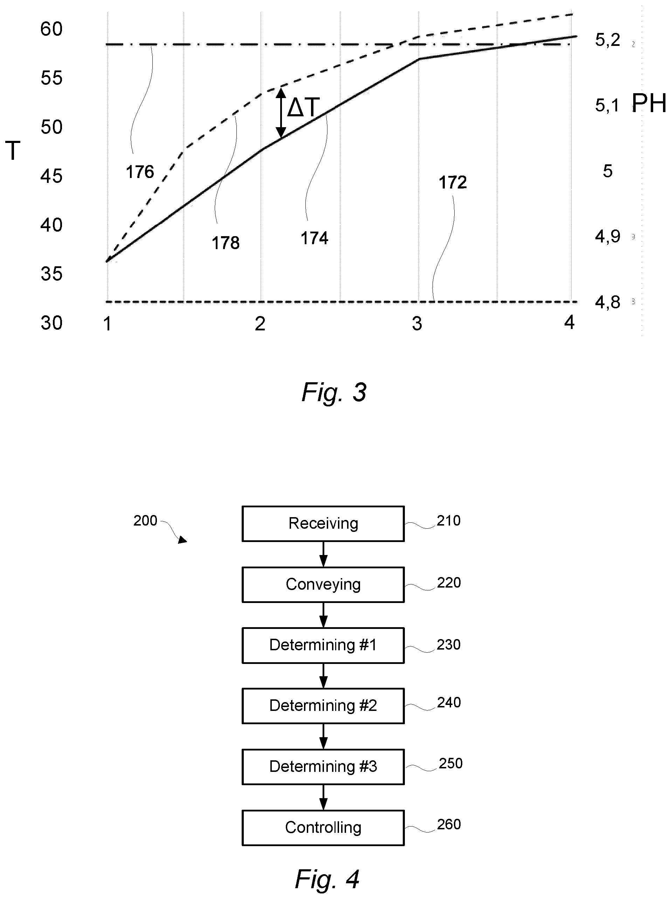

Fig. 3 illustrates examples of temperature profiles and PH profiles across different sections of the dry cooker 100. Fig. 3 shows examples of control/adjusting the heat load of the heating media, configured to be in fluid connection with the hollow passage of the flighted auger 116 of the heating unit 110, 120, 130, based on the determined PH of the pasta-filata cheese at the inlet 111 of the heating unit 110, 120, 130. Locations 1, 2, 3, and 4 corresponds to the locations of Fig. 2a. Fig. 3 illustrates two temperature profiles 174, 178 and two PH profiles 172, 176. The PH profile 172 corresponds to a PH value of 4.8 which is a desired PH value. The temperature profile 174 corresponds to the PH profile 172. The temperature profile 174 illustrates a desired temperature profile of the pasta-filata cheese. The PH profile 176 corresponds to a PH value of 5.28 which is higher than the desired PH value of 4.8. The temperature profile 178 corresponds to the PH profile 176. The temperature profile 178 has an offset ΔT, compared to the desired temperature profile 174. The temperature profile 178 is used when the PH is higher, in this example 5.28.

Fig. 4 shows step of a method 200 for producing pasta-filata cheese by a dry cooker 100. The method 200 comprises step of receiving 210 the pasta-filata cheese via an inlet 111, 121, 131 of a chamber 112, 122, 132 of a heating unit 110, 120, 130 of the dry cooker 100. The method 200 comprises step of conveying 220 the pasta-filata cheese from the inlet 111, 121, 131 to an outlet 113, 123, 133 of the chamber 112, 122, 132 of the dry cooker 100 by a flighted auger 116, 126, 136 arranged in the chamber 112, 122, 132. The method 200 comprises step of determining 230, 240, 250 a temperature T11, T21, T31 of the pasta-filata cheese at the inlet 111, 121, 131 of the chamber 112, 122, 132 by a first temperature sensor 115-1, 125-1, 135-1. The step of determining 230 may correspond to the first section 110. The step of determining 240 may correspond to the second section 120. The step of determining 250 may correspond to the third section 130. The method 200 comprises step of controlling 260 a first heat load S11, S21, S31, HL of a heating media W1, W2, W3, S, being in fluid connection with a hollow passage of the flighted auger 116, 126, 136 of the heating unit 110, 120, 130, based on the determined 230 temperature T11, T21, T31 of the pasta-filata cheese at the inlet 111, 121, 131.

Still in connection with Fig. 4, the method 200 may further comprises the step of determining 230, 240, 250 a temperature T12, T22, T32 of the pasta-filata cheese at the outlet 113, 123, 133 of the chamber 112, 122, 132 by a second temperature sensor 115-2, 125-2, 135-2. The step of controlling 260 may further comprise controlling 260 the first heat load S11, S21, S31, HL of the heating media W1, W2, W3, S, being configured to be in fluid connection with the flighted auger 116, 126, 136 of the heating unit 110, 120, 130, based on the determined 240 temperature T12, T22, T32 of the pasta-filata cheese at the outlet 113, 123, 133. The method 200 may further comprise the step of determining 230, 240, 250 a PH of the pasta-filata cheese at the inlet 111 of the first heating unit 110 by a PH sensor 115-3. The step of controlling 260 may comprise controlling 260 the first heat load S11, S21, S31, HL of the heating media W1, W2, W3, S, being configured to be in fluid connection with the flighted auger 116, 126, 136 of the heating unit 110, 120, 130, based on the determined 250 PH of the pasta-filata cheese at the inlet 111.

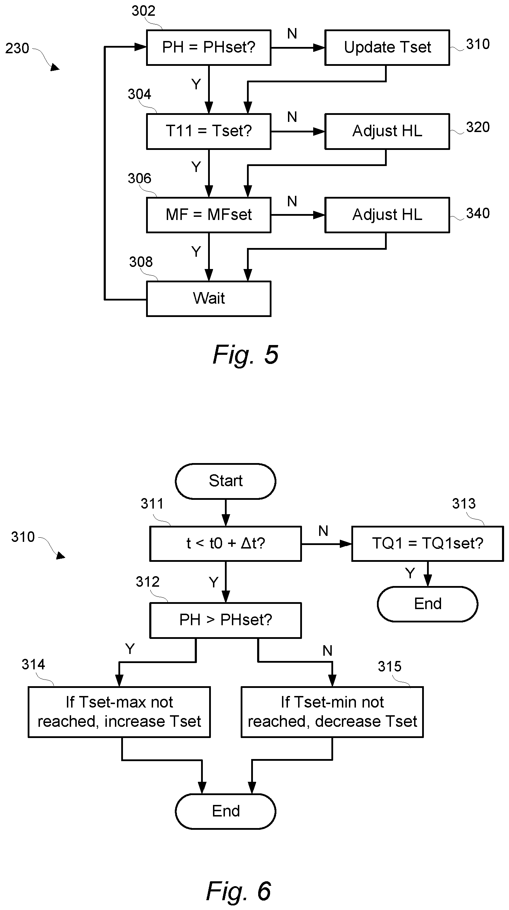

Fig. 5 shows steps of the method step 230 shown in Fig. 4. Fig. 5 shows that the step of determining 230 may comprise comparing 302 a PH of the pasta-filata cheese with a setpoint PH value. The set point PH value may be in the range of 4 to 6, such as 4.8. The step of determining 230 may comprise updating 310 a setpoint temperature of the flighted auger 116, 126, 136 and/or the heating jacket 114, 124, 134 and/or the steam injector 117, 127, 137 if the PH of the pasta-filata cheese differs from the setpoint PH value. The step of determining 230 may comprise comparing 304 the determined temperature of the pasta-filata cheese at the inlet 111, by a first temperature sensor 115-1, with a setpoint temperature of the flighted auger 116, 126, 136. The setpoint temperature of the flighted auger 116, 126, 136 may be in the range of 40 to 70 °C. The step of determining 230 may comprise adjusting 320 the first heat load S11, S21, S31, HL of a heating media W1, being in fluid connection with a hollow passage of the flighted auger 116, 126, 136 if the determined temperature of the pasta-filata cheese at the inlet 111 differs from the setpoint temperature of the flighted auger 116, 126, 136. The step of determining 230 may comprise comparing 306 the determined mass flow MF of the first heat load HL by the mass flow sensor, with a setpoint mass flow MF of the first heat load. The setpoint mass flow MF of the first heat load HL may be in the range of X to XX . The step of determining 230 may comprise adjusting 340 the first heat load HL of a heating media W1, being in fluid connection with a hollow passage of the flighted auger 116, 126, 136 if the determined mass flow MF of the first heat load HL differs from the setpoint mass flow MF of the first heat load HL. The step of determining 230, 240, 25 may be performed at intervals in the range of 1 to 5 min such as 2 min. The step of determining 230 may comprise waiting 308. The step of determining 230 may be repeated subsequent to the waiting 308.

Fig. 6 shows steps of the method step 310 shown in Fig. 5. Fig. 6 shows that the step updating 310 may comprise comparing/checking 311 interval time. The step of updating 310 may comprise comparing 312 the PH of the pasta-filata cheese with the setpoint PH value, if still within the interval time. The step of updating 310 may comprise comparing 313 determined torque TQ1, TQ2, TQ3 of the rotating flighted auger 116, 126, 136, by the torque sensor with a set point torque value, if not within the interval time. The step of updating 310 may end if the determined torque TQ1, TQ2, TQ3 of the rotating flighted auger 116, 126, 136 equals with the set point torque value. The step of updating 310 may comprise increasing 314 the setpoint temperature of the flighted auger 116, 126, 136 and/or the heating jacket 114, 124, 134 and/or the steam injector 117, 127, 137 if a respective maximum setpoint temperature is not reached. The step of updating 310 may comprise decreasing 315 the setpoint temperature of the flighted auger 116, 126, 136 and/or the heating jacket 114, 124, 134 and/or the steam injector 117, 127, 137 if a respective minimum setpoint temperature is not reached. The step of updating 310 may end subsequent to the step of increasing 314 or decreasing 315 until the next interval begins.

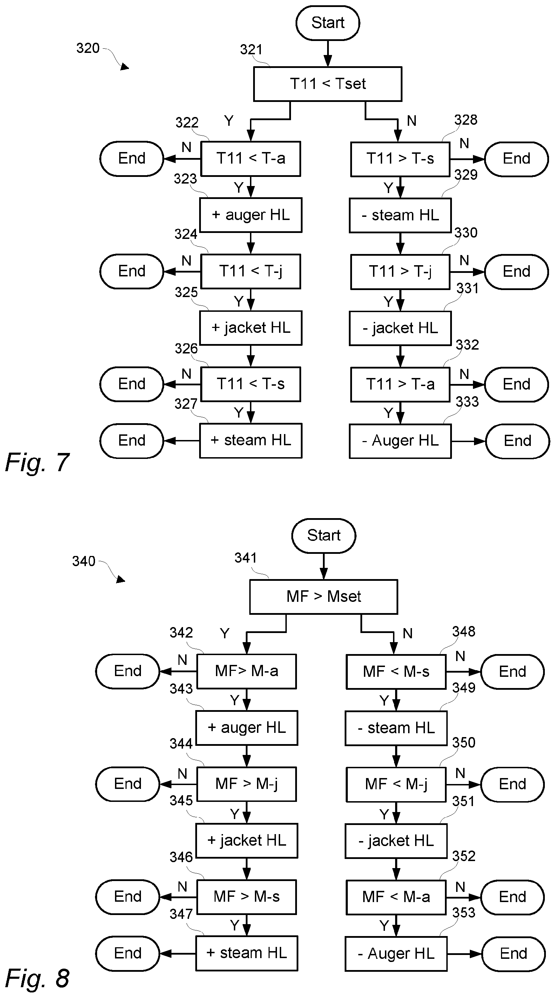

Figs. 7 and 8 show steps of the method steps 320, 340 shown in Fig. 5. The step of controlling 260 the first heat load S11, S21, S31, HL of the heating media W1, W2, W3, S may comprise adjusting 320, 340 the first heat load S11, S21, S31, HL of the heating media W1, W2, W3, S, being configured to be in fluid connection with the hollow passage of the flighted auger 116, 126, 136 of the heating unit 110, 120, 130, when a difference in the determined temperature T11, T21, T31 of the pasta-filata cheese at the inlet 111, 121, 131 and the setpoint temperature of the flighted auger 116, 126, 136 is larger than a first pre-determined value T-a, Ma. The first pre-determined value T-a, Ma may be in the range of 2 to 5 °C such as 3 °C. The step of controlling 260 may further comprise controlling 260 a second heat load S12, S22, S32, HL of the heating media W1, W2, W3, S, being configured to be in fluid connection with the heating jacket 118, 128, 138 of the heating unit 110, 120, 130, based on the determined temperature T11, T21, T31 of the pasta-filata cheese at the inlet 111, 121, 131 by the first temperature sensor 115-1, 125-1, 135-1. The step of controlling 260 the second heat load S12, S22, S32, HL of the heating media W1, W2, W3, S may comprise adjusting the second heat load S12, S22, S32, HL of the heating media W1, W2, W3, S, being configured to be in fluid connection with the heating jacket 118, 128, 138 of the heating unit 110, 120, 130, when a difference in the determined temperature T11, T21, T31 of the pasta-filata cheese at the inlet 111, 121, 131 and the setpoint temperature of the heating jacket 114, 124, 134 is larger than a third pre-determined value T-j, M-j. The third pre-determined T-j, M-j value may be in the range of 2 to 5 °C such as 3 °C. The step of controlling 260 may further comprise controlling 260 a third heat load S13, S23, S33, HL of heating media W1, W2, W3, S, being configured to be in fluid connection with the steam injector 117, 127, 137 of the heating unit 110, 120, 130, based on the determined temperature (T11, T21, T31 of the pasta-filata cheese at the inlet 111, 121, 131 by the first temperature sensor 115-1, 125-1, 135-1. The step of controlling 260 the third heat load S13, S23, S33, HL of the heating media W1, W2, W3, S may comprise adjusting the third heat load S13, S23, S33, HL of heating media W1, W2, W3, S, being configured to be in fluid connection with the steam injector 117, 127, 137 of the heating unit 110, 120, 130, when a difference in the temperature T11, T21, T31 of the pasta-filata cheese at the inlet 111, 121, 131 and a setpoint temperature of the steam injector 117, 127, 137 is larger than a fifth pre-determined value T-s, M-s. The fifth pre-determined value T-s, M-s may be in the range of 2 to 5 °C such as 3 °C. The fifth pre-determined value T-s, M-s is larger than the third pre-determined value T-j, M-j and the third pre-determined value T-j, M-j is larger than the first pre-determined T-a, Ma value.

Still in connection with Fig. 7, the step of adjusting 320 may begin with comparing 321 the determined temperature T11 of the pasta-filata cheese at the inlet 111, by the first temperature sensor 115-1, with the setpoint temperatures of the flighted auger 116, 126, 136, the heating jacket 118, 128, 138 and the stem injector 117, 127, 137. If the determined temperature T11 of the pasta-filata cheese at the inlet 111 is lower than the setpoint temperatures Tset, the method may proceed to steps 322, 323, 324, 325, 326, 327. If the determined temperature T11 of the pasta-filata cheese at the inlet 111 is higher than the setpoint temperatures Tset, the method may proceed to steps 328, 329, 330, 331, 332, 333.

Still in connection with Fig. 7, if the determined temperature T11 of the pasta-filata cheese at the inlet 111 is lower than the setpoint temperatures Tset, the method 320 begins with comparing 322 and if needed increasing 323 a temperature the first heat load HL supplied by the flighted auger 116, 126, 136. The method 320 next proceeds to comparing 324 and if needed increasing 325 a temperature of the second heat load supplied by the heating jacket 114, 124, 134. The method 320 next proceeds to comparing 326 and if needed increasing 327 a temperature of the third heat load supplied by the steam injector 117, 127, 137. Fig. 7 shows that, if the determined temperature T11 of the pasta-filata cheese at the inlet 111 is higher than the setpoint temperatures Tset, the method 320 begins with comparing 328 and if needed decreasing 329 the temperature of the third heat load supplied by the steam injector 117, 127, 137. The method 320 next proceeds to comparing 330 and if needed decreasing 331 the temperature of the second heat load supplied by the heating jacket 114, 124, 134. The method 320 next proceeds to comparing 332 and if needed decreasing 333 the temperature of the first heat load HL supplied by the flighted auger 116, 126, 136.

Fig. 8 shows that the step of adjusting 340 may begin with comparing 341 the determined mass flow MF of the first heat load HL, by the mass flow sensor, with the setpoint mass flow of the first heat load HL, the second heat load HL and the third heat load HL. If the determined mass flow MF of the first heat load HL is higher than the setpoint mass flows Mset, the method may proceed to steps 342, 343, 344, 345, 345, 346, 347. If the determined mass flow MF of the first heat load HL is lower than the setpoint temperatures mass flow Mset, the method may proceed to steps 348, 349, 350, 351, 352, 353.

Still in connection with Fig. 8, if the determined mass flow MF of the first heat load HL is higher than the setpoint mass flows Mset, the method 340 begins with comparing 342 and if needed increasing 343 a mass flow of the first heat load HL supplied by the flighted auger 116, 126, 136. The method 340 next proceeds to comparing 344 and if needed increasing 345 a mass flow of the second heat load supplied by the heating jacket 114, 124, 134. The method 340 next proceeds to comparing 346 and if needed increasing 347 a mass flow of the third heat load supplied by the steam injector 117, 127, 137. Fig. 7 shows that, if the determined temperature T11 of the pasta-filata cheese at the inlet 111 is higher than the setpoint temperatures Tset, the method 340 begins with comparing 348 and if needed decreasing 349 the mass flow of the third heat load supplied by the steam injector 117, 127, 137. The method 340 next proceeds to comparing 350 and if needed decreasing 351 the mass flow of the second heat load supplied by the heating jacket 114, 124, 134. The method 340 next proceeds to comparing 352 and if needed decreasing 353 the mass flow of the first heat load HL supplied by the flighted auger 116, 126, 136.

From the description above follows that, although various embodiments of the invention have been described and shown, the invention is not restricted thereto, but may also be embodied in other ways within the scope of the subject-matter defined in the following claims.

The invention may be embodied according to the numbered items described hereafter.
1. A dry cooker (100) for producing pasta-filata cheese, the dry cooker (100) comprising at least two heating units (110, 120, 130), the heating unit (110, 120, 130) comprising:
   - a chamber (112, 122, 132) for conveying the pasta-filata cheese from an inlet (111, 121, 131) to an outlet (113, 123, 133) of the chamber (112, 122, 132),
   - a flighted auger (116, 126, 136) arranged in the chamber (112, 122, 132) and configured to rotationally heat the pasta-filata cheese, wherein the flighted auger (116, 126, 136) comprises a hollow passage configured to be in fluid connection with a heating media (W1, W2, W3, S),
   - a heating jacket (114, 124, 134) surrounding the chamber (112, 122, 132) and configured to be in fluid connection with the heating media (W1, W2, W3, S),
   - a steam injector (117, 127, 137) arranged in connection with the chamber (112, 122, 132), configured to be in fluid connection with the heating media (W1, W2, W3, S) and configured to inject steam into the chamber (112, 122, 132),
   - a PH sensor (115-3) arranged at the inlet (111, 121, 131) of the heating unit (110, 120, 130) and configured to determine (230, 240, 250) a PH of the pasta-filata cheese at the inlet (111, 121, 131) of the heating unit (110, 120, 130), and
   - a control unit (140) configured to control (260) a first heat load (S11, S21, S31, HL) of the heating media (W1, W2, W3, S), configured to be in fluid connection with the hollow passage of the flighted auger (116, 126, 136), based on the determined PH of the pasta-filata cheese at the inlet (111, 121, 131) of the heating unit (110, 120, 130) by the PH sensor (115-3).
2. The dry cooker (100) according to item 1, wherein the dry cooker (100) further comprises a first temperature sensor (115-1, 125-1, 135-1) arranged at the inlet (111, 121, 131) of the chamber (112, 122, 132) and configured to determine (230, 240, 250) a temperature (T11, T21, T31) of the pasta-filata cheese at the inlet (111, 121, 131), and
   wherein the control unit (140) is further configured to control (260) the first heat load (S11, S21, S31, HL) of the heating media, configured to be in fluid connection with the hollow passage of the flighted auger (116) of the heating unit (110, 120, 130), based on the determined temperature (T11, T21, T31) of the pasta-filata cheese at the inlet (111, 121, 131) by the first temperature sensor (115-1, 125-1, 135-1).
3. The dry cooker (100) according to item 2, wherein the control unit (140) is further configured to control (260) a second heat load (S12, S22, S32, HL) of the heating media (W1, W2, W3, S), configured to be in fluid connection with the heating jacket (118, 128, 138), based on the determined temperature (T11, T21, T31) of the pasta-filata cheese at the inlet (111, 121, 131) by the first temperature sensor (115-1, 125-1, 135-1).
4. The dry cooker (100) according to item 2 or 3, wherein the control unit (140) is further configured to control (260) a third heat load (S13, S23, S33, HL) of the heating media (W1, W2, W3, S), configured to be in fluid connection with the steam injector (117, 127, 137), based on the determined temperature (T11, T21, T31) of the pasta-filata cheese at the inlet (111, 121, 131) by the first temperature sensor (115-1, 125-1, 135-1).
5. The dry cooker (100) according to any of the preceding items, wherein the dry cooker (100) further comprises a second temperature sensor (115-2, 125-2, 135-2) arranged at the outlet (113, 123, 133) of the chamber (112, 122, 132) and configured to determine (230, 240, 250) a temperature (T12, T22, T32) of the pasta-filata cheese at the outlet (113, 123, 133), and
   wherein the control unit (140) is further configured to control (260) the first heat load (S11, S21, S31, HL) of the heating media (W1, W2, W3, S), configured to be in fluid connection with the hollow passage of the flighted auger (116, 126, 136), based on the determined temperature (T12, T22, T32) of the pasta-filata cheese at the outlet (113, 123, 133) by the second temperature sensor (115-2, 125-2, 135-2).
6. The dry cooker (100) according to item 5, wherein the control unit (140) is further configured to control (260) the second heat load (S12, S22, S32, HL) of the heating media (W1, W2, W3, S), configured to be in fluid connection with the heating jacket (118, 128, 138), based on the determined temperature (T12, T22, T32) of the pasta-filata cheese at the outlet (113, 123, 133) by the second temperature sensor (115-2, 125-2, 135-2).
7. The dry cooker (100) according to item 5 or 6, wherein the control unit (140) is further configured to control (260) the third heat load (S13, S23, S33, HL) the heating media (W1, W2, W3, S), configured to be in fluid connection with the steam injector (117, 127, 137), based on the determined temperature (T12, T22, T32) of the pasta-filata cheese at the outlet (113, 123, 133) by the second temperature sensor (115-2, 125-2, 135-2).
8. The dry cooker (100) according to any of the preceding items, the dry cooker (100) comprising a first heating unit (110), a second heating unit (120) and a first conveying means (152) arranged in between the first heating unit (110) and the second heating unit (120),
   wherein the second heating unit (120) is arranged downstream the first heating unit (110), wherein the first conveying means (152) is configured to convey the pasta-filata cheese from the outlet (113) of the first heating unit (110) to the inlet (121) of the second heating unit (120).
9. The dry cooker (100) according to item 8, the dry cooker (100) further comprises a weight sensor (115-4) arranged at the first conveying means (152) and configured to determine (230, 240, 250) a weight (W) of the pasta-filata cheese being conveyed from the first heating unit (110) to the second heating unit (120),
   wherein the control unit (140) is further configured to control (260) the first heat load (S11, S21, S31, HL) of the heating media (W1, W2, W3, S), configured to be in fluid connection with the hollow passage of the flighted auger (126) of the second heating unit (110), based on the determined weight (W) of the pasta-filata cheese at the first conveying means (152) by the weight sensor (115-4).
10. The dry cooker (100) according to any of the preceding items, the dry cooker further comprising a torque sensor arranged in connection with the flighted auger (116, 126, 136) and configured to determine (230, 240, 250) a torque (TQ1, TQ2, TQ3) of the rotating flighted auger (116, 126, 136),
   wherein the control unit (140) is further configured to control (260) the first heat load (S11, S21, S31, HL) of the heating media (W1, W2, W3, S), configured to be in fluid connection with the hollow passage of the flighted auger (116, 126, 136), based the determined torque (TQ1, TQ2, TQ3) of the rotating flighted auger (116, 126, 136) by the torque sensor.
11. The dry cooker (100) according to any of the preceding items, wherein the dry cooker (100) further comprises a mass flow (MF) sensor arranged in connection with the flighted auger (116, 126, 136) and configured to determine (230, 240, 250) a mass flow (MF) of the first heat load (S11, S21, S31, HL),
   wherein the control unit (140) is further configured to control (260) the first heat load (S11, S21, S31, HL) of the heating media, configured to be in fluid connection with the hollow passage of the flighted auger (116) of the first heating unit (110), based on the determined mass flow (MF) of the first heat load (S11, S21, S31, HL) by the mass flow (MF) sensor.
12. The dry cooker (100) according to any of the preceding items, wherein the dry cooker (100) is configured such that the heating media (W1, W2, W3, S) has no direct contact with pasta-filata cheese.
13. A method (200) for producing pasta-filata cheese by a dry cooker (100), the method (200) comprising steps of:
   - receiving (210) the pasta-filata cheese via an inlet (111, 121, 131) of a chamber (112, 122, 132) of a heating unit (110, 120, 130) of the dry cooker (100),
   - conveying (220) the pasta-filata cheese from the inlet (111, 121, 131) to an outlet (113, 123, 133) of the chamber (112, 122, 132) of the dry cooker (100) by a flighted auger (116, 126, 136) arranged in the chamber (112, 122, 132),
   - determining (230, 240, 250) a PH of the pasta-filata cheese at the inlet (111) of the first heating unit (110) by a PH sensor (115-3),
   - controlling (260) a first heat load (S11, S21, S31, HL) of a heating media (W1, W2, W3, S), being in fluid connection with a hollow passage of the flighted auger (116, 126, 136) of the heating unit (110, 120, 130), based on the determined PH of the pasta-filata cheese at the inlet (111).
14. The method (200) according to items 13, the method (200) further comprising the step of:
   - determining (230, 240, 250) a temperature (T11, T21, T31) of the pasta-filata cheese at the inlet (111, 121, 131) of the chamber (112, 122, 132) by a first temperature sensor (115-1, 125-1, 135-1),
   wherein the step of controlling (260) comprises controlling (260) the first heat load (S11, S21, S31, HL) of the heating media (W1, W2, W3, S), being configured to be in fluid connection with the flighted auger (116, 126, 136) of the heating unit (110, 120, 130), based on the determined temperature (T11, T21, T31) of the pasta-filata cheese at the inlet (111, 121, 131).
15. The method (200) according to item 14, wherein the step of controlling (260) further comprises:
   - controlling (260) a second heat load (S12, S22, S32, HL) of the heating media (W1, W2, W3, S), being configured to be in fluid connection with a heating jacket (118, 128, 138) of the heating unit (110, 120, 130), based on the determined temperature (T11, T21, T31) of the pasta-filata cheese at the inlet (111, 121, 131) by the first temperature sensor (115-1, 125-1, 135-1).
16. The method (200) according to item 14 or 15, wherein the step of controlling (260) further comprises:
   - controlling (260) a third heat load (S13, S23, S33, HL) of the heating media (W1, W2, W3, S), being configured to be in fluid connection with a steam injector (117, 127, 137) of the heating unit (110, 120, 130), based on the determined temperature (T11, T21, T31) of the pasta-filata cheese at the inlet (111, 121, 131) by the first temperature sensor (115-1, 125-1, 135-1).
17. The method (200) according to any of the items 13-15, the method (200) further comprising the step of:
   - determining (230, 240, 250) a temperature (T12, T22, T32) of the pasta-filata cheese at the outlet (113, 123, 133) of the chamber (112, 122, 132) by a second temperature sensor (115-2, 125-2, 135-2),
      wherein the step of controlling (260) comprises controlling (260) the first heat load (S11, S21, S31, HL) of the heating media (W1, W2, W3, S), being configured to be in fluid connection with the flighted auger (116, 126, 136) of the heating unit (110, 120, 130), based on the determined temperature (T12, T22, T32) of the pasta-filata cheese at the outlet (113, 123, 133).
18. The method (200) according to any of the items 13-17, wherein the step of determining (230, 240, 250) is performed at intervals in the range of 1 to 5 min such as 2 min.
19. The dry method (200) according to any of the items 14-18, wherein the step of controlling (260) the first heat load (S11, S21, S31, HL) of the heating media (W1, W2, W3, S) comprises adjusting (320, 340) the first heat load (S11, S21, S31, HL) of the heating media (W1, W2, W3, S), being configured to be in fluid connection with a hollow passage of the flighted auger (116, 126, 136) of the heating unit (110, 120, 130), when a difference in the determined temperature (T11, T21, T31) of the pasta-filata cheese at the inlet (111, 121, 131) and a setpoint temperature of the flighted auger (116, 126, 136) is larger than a first pre-determined value (T-a, M-a), the first pre-determined value (T-a, M-a) being in the range of 2 to 5 °C such as 3 °C.
20. The method (200) according to any of the items 18-19, wherein the step of controlling (260) the first heat load (S11, S21, S31, HL) of the heating media (W1, W2, W3, S), being configured to be in fluid connection with the flighted auger (116, 126, 136) of the heating unit (110, 120, 130) comprises adjusting a temperature of the first heat load (S11, S21, S31, HL) by a second pre-determined value within each interval, the second pre-determined value being in the range of 0.1 to 2 °C.
21. The method (200) according to any of the items 15-20, wherein the step of controlling (260) the second heat load (S12, S22, S32, HL) of the heating media (W1, W2, W3, S) comprises adjusting (320, 340) the second heat load (S12, S22, S32, HL) of the heating media (W1, W2, W3, S), being configured to be in fluid connection with a heating jacket (118, 128, 138) of the heating unit (110, 120, 130), when a difference in the determined temperature (T11, T21, T31) of the pasta-filata cheese at the inlet (111, 121, 131) and a setpoint temperature of the heating jacket (114, 124, 134) is larger than a third pre-determined value (T-j, M-j), the third pre-determined value (T-j, M-j) being in the range of 2 to 5 °C such as 3 °C.
22. The method (200) according to any of the items 18-21, wherein the step of controlling (260) the second heat load (S12, S22, S32, HL) of the heating media (W1, W2, W3, S), being configured to be in fluid connection with the heating jacket (118, 128, 138) of the heating unit (110, 120, 130), comprises adjusting a temperature of the second heat load (S12, S22, S32, HL) by a fourth pre-determined value within each interval, the fourth pre-determined value being in the range of 0.1 to 2 °C.
23. The method (200) according to any of the items 16-22, wherein the step of controlling (260) the third heat load (S13, S23, S33, HL) of the steam comprises adjusting (320, 340) third heat load (S13, S23, S33, HL) of heating media (W1, W2, W3, S), being configured to be in fluid connection with the steam injector (117, 127, 137) of the heating unit (110, 120, 130), when a difference in the temperature (T11, T21, T31) of the pasta-filata cheese at the inlet (111, 121, 131) and a setpoint temperature of the steam injector (117, 127, 137) is larger than a fifth pre-determined value (T-s, M-s), the fifth pre-determined value (T-s, M-s) being in the range of 2 to 5 °C such as 3 °C.
24. The method (200) according to any of the items 18-23, wherein the step of controlling (260) third heat load (S13, S23, S33, HL) of the heating media (W1, W2, W3, S), being configured to be in fluid connection with the steam injector (117, 127, 137) of the heating unit (110, 120, 130), comprises adjusting a temperature of the heating media (W1, W2, W3, S) by a sixth pre-determined value within each interval, the sixth pre-determined value being in the range of 0.1 to 2 °C.
25. The method (200) according to item 19-24, wherein fifth pre-determined value (T-s, M-s) is larger than the third pre-determined value (T-j, M-j) and the third pre-determined value (T-j, M-j) is larger than the first pre-determined value (T-a, M-a).

## Claims

1. A dry cooker (100) for producing pasta-filata cheese, the dry cooker (100) comprising at least two heating units (110, 120, 130), the heating unit (110, 120, 130) comprising:
- a chamber (112, 122, 132) for conveying the pasta-filata cheese from an inlet (111, 121, 131) to an outlet (113, 123, 133) of the chamber (112, 122, 132),
- a flighted auger (116, 126, 136) arranged in the chamber (112, 122, 132) and configured to rotationally heat the pasta-filata cheese, wherein the flighted auger (116, 126, 136) comprises a hollow passage configured to be in fluid connection with a heating media (W1, W2, W3, S),
- a heating jacket (114, 124, 134) surrounding the chamber (112, 122, 132) and configured to be in fluid connection with the heating media (W1, W2, W3, S),
- a steam injector (117, 127, 137) arranged in connection with the chamber (112, 122, 132), configured to be in fluid connection with the heating media (W1, W2, W3, S) and configured to inject steam into the chamber (112, 122, 132),
- a PH sensor (115-3) arranged at the inlet (111, 121, 131) of the heating unit (110, 120, 130) and configured to determine (230, 240, 250) a PH of the pasta-filata cheese at the inlet (111, 121, 131) of the heating unit (110, 120, 130), and
- a control unit (140) configured to control (260) a first heat load (S11, S21, S31, HL) of the heating media (W1, W2, W3, S), configured to be in fluid connection with the hollow passage of the flighted auger (116, 126, 136), based on the determined PH of the pasta-filata cheese at the inlet (111, 121, 131) of the heating unit (110, 120, 130) by the PH sensor (115-3).

2. The dry cooker (100) according to claim 1, wherein the dry cooker (100) further comprises a first temperature sensor (115-1, 125-1, 135-1) arranged at the inlet (111, 121, 131) of the chamber (112, 122, 132) and configured to determine (230, 240, 250) a temperature (T11, T21, T31) of the pasta-filata cheese at the inlet (111, 121, 131), and
wherein the control unit (140) is further configured to control (260) the first heat load (S11, S21, S31, HL) of the heating media, configured to be in fluid connection with the hollow passage of the flighted auger (116) of the heating unit (110, 120, 130), based on the determined temperature (T11, T21, T31) of the pasta-filata cheese at the inlet (111, 121, 131) by the first temperature sensor (115-1, 125-1, 135-1).

3. The dry cooker (100) according to claim 2, wherein the control unit (140) is further configured to control (260) a second heat load (S12, S22, S32, HL) of the heating media (W1, W2, W3, S), configured to be in fluid connection with the heating jacket (118, 128, 138), based on the determined temperature (T11, T21, T31) of the pasta-filata cheese at the inlet (111, 121, 131) by the first temperature sensor (115-1, 125-1, 135-1).

4. The dry cooker (100) according to claim 2 or 3, wherein the control unit (140) is further configured to control (260) a third heat load (S13, S23, S33, HL) of the heating media (W1, W2, W3, S), configured to be in fluid connection with the steam injector (117, 127, 137), based on the determined temperature (T11, T21, T31) of the pasta-filata cheese at the inlet (111, 121, 131) by the first temperature sensor (115-1, 125-1, 135-1).

5. The dry cooker (100) according to any of the preceding claims, wherein the dry cooker (100) further comprises a second temperature sensor (115-2, 125-2, 135-2) arranged at the outlet (113, 123, 133) of the chamber (112, 122, 132) and configured to determine (230, 240, 250) a temperature (T12, T22, T32) of the pasta-filata cheese at the outlet (113, 123, 133), and
wherein the control unit (140) is further configured to control (260) the first heat load (S11, S21, S31, HL) of the heating media (W1, W2, W3, S), configured to be in fluid connection with the hollow passage of the flighted auger (116, 126, 136), based on the determined temperature (T12, T22, T32) of the pasta-filata cheese at the outlet (113, 123, 133) by the second temperature sensor (115-2, 125-2, 135-2).

6. The dry cooker (100) according to any of the preceding claims, the dry cooker (100) comprising a first heating unit (110), a second heating unit (120) and a first conveying means (152) arranged in between the first heating unit (110) and the second heating unit (120),
wherein the second heating unit (120) is arranged downstream the first heating unit (110), wherein the first conveying means (152) is configured to convey the pasta-filata cheese from the outlet (113) of the first heating unit (110) to the inlet (121) of the second heating unit (120).

7. The dry cooker (100) according to claim 6, the dry cooker (100) further comprises a weight sensor (115-4) arranged at the first conveying means (152) and configured to determine a weight (W) of the pasta-filata cheese being conveyed from the first heating unit (110) to the second heating unit (120),
wherein the control unit (140) is further configured to control (260) the first heat load (S11, S21, S31, HL) of the heating media (W1, W2, W3, S), configured to be in fluid connection with the hollow passage of the flighted auger (126) of the second heating unit (110), based on the determined weight (W) of the pasta-filata cheese at the first conveying means (152) by the weight sensor (115-4).

8. The dry cooker (100) according to any of the preceding claims, wherein the dry cooker (100) is configured such that the heating media (W1, W2, W3, S) has no direct contact with pasta-filata cheese.

9. A method (200) for producing pasta-filata cheese by a dry cooker (100), the method (200) comprising steps of:
- receiving (210) the pasta-filata cheese via an inlet (111, 121, 131) of a chamber (112, 122, 132) of a heating unit (110, 120, 130) of the dry cooker (100),
- conveying (220) the pasta-filata cheese from the inlet (111, 121, 131) to an outlet (113, 123, 133) of the chamber (112, 122, 132) of the dry cooker (100) by a flighted auger (116, 126, 136) arranged in the chamber (112, 122, 132),
- determining (230, 240, 250) a PH of the pasta-filata cheese at the inlet (111) of the first heating unit (110) by a PH sensor (115-3),
- controlling (260) a first heat load (S11, S21, S31, HL) of a heating media (W1, W2, W3, S), being in fluid connection with a hollow passage of the flighted auger (116, 126, 136) of the heating unit (110, 120, 130), based on the determined PH of the pasta-filata cheese at the inlet (111).

10. The method (200) according to claim 9, the method (200) further comprising the step of:
- determining (230, 240, 250) a temperature (T11, T21, T31) of the pasta-filata cheese at the inlet (111, 121, 131) of the chamber (112, 122, 132) by a first temperature sensor (115-1, 125-1, 135-1),
wherein the step of controlling (260) comprises controlling (260) the first heat load (S11, S21, S31, HL) of the heating media (W1, W2, W3, S), being configured to be in fluid connection with the flighted auger (116, 126, 136) of the heating unit (110, 120, 130), based on the determined temperature (T11, T21, T31) of the pasta-filata cheese at the inlet (111, 121, 131).

11. The method (200) according to claim 9 or 10, wherein the step of determining (230, 240, 250) is performed at intervals in the range of 1 to 5 min such as 2 min.

12. The dry method (200) according to any of the claims 10-11, wherein the step of controlling (260) the first heat load (S11, S21, S31, HL) of the heating media (W1, W2, W3, S) comprises adjusting (320, 340) the first heat load (S11, S21, S31, HL) of the heating media (W1, W2, W3, S), being configured to be in fluid connection with a hollow passage of the flighted auger (116, 126, 136) of the heating unit (110, 120, 130), when a difference in the determined temperature (T11, T21, T31) of the pasta-filata cheese at the inlet (111, 121, 131) and a setpoint temperature of the flighted auger (116, 126, 136) is larger than a first pre-determined value (T-a, M-a), the first pre-determined value (T-a, M-a) being in the range of 2 to 5 °C such as 3 °C.

13. The method (200) according to any of the claims 10-12, wherein the step of controlling (260) further comprises:
- controlling (260) a second heat load (S12, S22, S32, HL) of the heating media (W1, W2, W3, S), being configured to be in fluid connection with the heating jacket (118, 128, 138) of the heating unit (110, 120, 130), based on the determined temperature (T11, T21, T31) of the pasta-filata cheese at the inlet (111, 121, 131) by the first temperature sensor (115-1, 125-1, 135-1),
wherein the step of controlling (260) the second heat load (S12, S22, S32, HL) of the heating media (W1, W2, W3, S) comprises adjusting (320, 340) the second heat load (S12, S22, S32, HL) of the heating media (W1, W2, W3, S), being configured to be in fluid connection with a heating jacket (118, 128, 138) of the heating unit (110, 120, 130), when a difference in the determined temperature (T11, T21, T31) of the pasta-filata cheese at the inlet (111, 121, 131) and a setpoint temperature of the heating jacket (114, 124, 134) is larger than a third pre-determined value (T-j, M-j), the third pre-determined value (T-j, M-j) being in the range of 2 to 5 °C such as 3 °C.

14. The method (200) according to any of the claims 10-13, wherein the step of controlling (260) further comprises:
- controlling (260) a third heat load (S13, S23, S33, HL) of heating media (W1, W2, W3, S), being configured to be in fluid connection with the steam injector (117, 127, 137) of the heating unit (110, 120, 130), based on the determined temperature (T11, T21, T31) of the pasta-filata cheese at the inlet (111, 121, 131) by the first temperature sensor (115-1, 125-1, 135-1),
wherein the step of controlling (260) the third heat load (S13, S23, S33, HL) of the heating media (W1, W2, W3, S) comprises adjusting (320, 340) the third heat load (S13, S23, S33, HL) of heating media (W1, W2, W3, S), being configured to be in fluid connection with the steam injector (117, 127, 137) of the heating unit (110, 120, 130), when a difference in the temperature (T11, T21, T31) of the pasta-filata cheese at the inlet (111, 121, 131) and a setpoint temperature of the steam injector (117, 127, 137) is larger than a fifth pre-determined value (T-s, M-s), the fifth pre-determined value (T-s, M-s) being in the range of 2 to 5 °C such as 3 °C.

15. The method (200) according to claim 12-14, wherein the fifth pre-determined value (T-s, M-s) is larger than the third pre-determined value (T-j, M-j) and the third pre-determined value (T-j, M-j) is larger than the first pre-determined value (Ta, M-a).
